# EUROPEAN PATENT APPLICATION

(11) **EP 1 643 351 A2**
(43) Date of publication of application: **05.04.2006**
(21) Application number: 05107798.0
(22) Date of filing: 25.08.2005
(51) Int. Cl.: G06F 3/033

(54) **Coordinate indicator**

(30) Priority: 30.08.2004 JP 2004250269
(71) Applicant: Wacom Co., Ltd., Saitama, Saitama 349-1148 (JP)
(72) Inventor: Fukushima, Yasuyuki WACOM Co., Ltd., Kitakatsushika-Gun 349-1117, Saitama-Ken (JP); Fujitsuka, Hiroyuki, 340-0203, Saitama-Ken (JP)
(74) Representative: Richardt, Markus Albert

(57) **Abstract**

In a coordinate indicator used for an input device of electronic equipment, to miniaturize the entire indicator as well as to secure resistance to impact and reliability by reducing components in size. A coordinate indicator includes a casing composed of an upper case, a substrate holder, a ceramic pipe, and an edge case; a center core, a ferrite core A moving together with the center core during operation, and a ferrite core B fixed to oppose the ferrite core A, which are accommodated within the casing. Around a tube accommodating part of the ferrite core A and the entire ferrite core B therein, a coated conducting wire is wound so as to form a coil.

## Description

### BACKGROUND OF THE INVENTION

### 1. Field of the Invention

The present invention relates to a coordinate indicating device used for input devices in electronic equipment such as computers.

### 2. Description of the Related Art

A pen tablet has been known as an input device for various electronic instruments such as computers. Since the pen tablet can be reduced in size compared with a key board, the application to a compact electronic instrument, such as a PDA (personal digital assistant), is expected, and the miniaturizing of the pen tablet is also demanded.

Other patent applications assigned to the same assignee as this application have proposed various techniques for miniaturizing a pen-shaped coordinate indicating device (so-called input pen) used in the pen tablet (see Japanese Unexamined Patent Application Publication No. 2002-244806, for example).

The coordinate indicating device disclosed in the above Publication has been devised for achieving its further miniaturizing using a ferrite core having an end surface without any opening so as to overcome the brittleness of ferrite. In the pen tablet utilizing electromagnetic induction, having a ferrite member built in may be essential. Hence, the brittleness of the ferrite is a very important problem, so that overcoming this problem may lead to the miniaturization of the pen-shaped coordinate indicating device to the large extent.

However, the miniaturization of the electronic instruments, especially of portable instruments, is progressing even now, so that the miniaturizing of the pen tablet is further strongly demanded. As is indicated also in Japanese Unexamined Patent Application Publication No. 2002-244806, when the pen-shaped coordinate indicating device is to be miniaturized, the ferrite core built therein must be very small.

However, the smaller the ferrite core becomes in size, a disadvantageous problem arises in resistivity to impact. It is obvious that the smaller other components become in size, their strengths decrease. On the other hand, during operation of portable electronic instruments, dropping of the pen-shaped coordinate indicating device is easily expected, so that it is important to secure the high impact resistance for giving safe feeling to users.

For this reason, even when the ferrite core and other components are reduced in size, a pen-shaped coordinate indicating device capable of overcoming the brittleness of these components has been demanded.

### SUMMARY OF THE INVENTION

The present invention provides a coordinate indicator, a position detector and a position detection system as claimed in the independent claims. Preferred embodiments are given in the dependent claims.

Accordingly, in a coordinate indicating device used for an input device of electronic equipment, the present invention enables to achieve the miniaturization of the entire coordinate indicating device by reducing components in size as well as to secure resistivity to impact and high reliability.

In accordance with an embodiment of the invention, a coordinate indicator for indicating a position to be measured to a position detector for measuring the position, and also for informing the position detector of the operation of an operator includes two cores, each being made of a magnetic material, arranged abreast at a predetermined interval; a tube for accommodating at least part of the two cores; and a coil composed of a conducting wire wound around the side of the tube, and in accordance with the operation of the operator, the two cores are allowed to come close to each other.

Preferably, the indicator according to the present invention further includes an elastic body arranged at a position between the two cores.

Preferably, at least one of the two cores is composed of a plurality of magnetic materials.

Preferably, at least part of the coil is at least doubly coiled by winding the conduction wire of the coil to overlap on the part of the coil.

Preferably, at least one of the two cores includes a projection formed on a surface opposing the other core.

Preferably, the indicator further includes a cushioning member wound around the outside of the coil.

Preferably, the elastic body is an o-ring.

Preferably, the tube is made of alumina or zirconia.

According to the present invention, in a coordinate indicator for indicating a position to be measured to a position detector for measuring the position, and also for informing the position detector of the operation of an operator, there are provided two cores, each being made of a magnetic material, arranged abreast at a predetermined interval; a tube for accommodating at least part of the two cores; and a coil composed of a conducting wire wound around the side of the tube, and in accordance with the operation of the operator, the two cores are allowed to come close to each other, so that the inductance of the coil varies in accordance with the operation of an operator. Thus, when the operation of the coordinate indicator according to the present invention is detected by the position detector for directly or indirectly detecting the inductance change in the coil of the coordinate indicator, an input device with preferable operability can be achieved.

In the coordinate indicator according to the present invention, at least part of the two cores is accommodated within the tube so that the cores are protected by the tube. Since the core is made of a generally brittle magnetic material such as a ferrite, the damage due to an external force such as an impact may occur when the core is very small in size; however, according to the coordinate indicator of the present invention, even if a strong external force is applied to the coordinate indicator, the effect of the external force on the core can be alleviated so as to prevent the damage of the core, because of the protection by the tube. Because of the high resistance to impact, the core can miniaturized to the extent impossible in the past, and it can be made in a slender shape which is especially brittle. Thereby, a very compact coordinate indicator with high resistance to impact for giving safe feeling to users can be achieved.

In the present invention, since an elastic body may be arranged between the two cores, the gap between the two cores is maintained constant during non-operation while in accordance with the force applied during operation, the gap is appropriately changed. Therefore, the operation of an operator is securely responded by the change in inductance of the coil. Furthermore, when the operation is completed, the gap can be promptly returned to the initial state. Thereby, preferable operability can be secured in a compact and reliable coordinate indicator with high resistance to impact.

In the present invention, since at least one of the two cores may be composed of a plurality of magnetic materials, the damage of the core can be more securely prevented. When the used magnetic material is a brittle ferrite, the possibility of damage is increased especially by forming it in a slender shape; however, according to the present invention, even the entire core is in a slender shape, the length of an individual magnetic member can be suppressed to such an extent that the damage scarcely occurs. Thereby, high resistance to impact and reliability can be further secured.

In the present invention, since at least part of the coil may be doubly coiled by winding the conduction wire of the coil to overlap on the part of the coil, when the gap between the cores is changed by the operation of an operator, the inductance of the coil is varied more sharply. The operation of the operator is thereby detected more securely by the position detector, so that more preferable operability can be obtained.

In the present invention, since at least one of the two cores may include a projection formed on a surface opposing the other core, the gap between the two cores during non-operation may be smaller reduced. Thereby, the inductance of the coil is more sharply varied when the gap between the two cores is changed by the operation by an operator, so that the operation by the operator can be more securely detected by the position detector, securing very preferable operability.

In the present invention, since the indicator may further include a cushioning member wound around the outside of the coil, when an external force such as impact is applied to members, because of the protection by the cushioning member, the effect on the members such as the cores from the external force can be alleviated, thereby obtaining more resistance to impact and reliability.

In the present invention, since the elastic body may be an o-ring, the distance between the two cores is maintained constant during non-operation of the coordinate indicator while during operation of the coordinate indicator, the distance between the two cores is changed in accordance with the external force. This preferable configuration may be easily achieved with low cost.

In the present invention, since the tube may be made of alumina or zirconia, the core can be securely protected against the pressure or impact applied from the outside, thereby obtaining more resistance to impact and reliability.

### BRIEF DESCRIPTION OF THE DRAWINGS

Fig. 1 is a sectional view of a coordinate indicator 11 according to a first embodiment of the present invention; Fig. 2 is an exemplary view of a ferrite core 121, a tube 115, a coil 116, and a cushioning member 105 in the coordinate indicator 11 shown in Fig. 1;
Fig. 3 is a circuit diagram showing the configuration of a coordinate input device 1 including the coordinate indicator 11 shown in Fig. 1;
Fig. 4 is a graph showing the correlation between the loads applied to the coordinate indicator 11 according to the first embodiment and the writing force levels detected by the coordinate input device 1;
Fig. 5 is a sectional view of a coordinate indicator 12 according to a second embodiment of the present invention;
Fig. 6 is a sectional view of a coordinate indicator 13 according to a third embodiment of the present invention;
Fig. 7 is a sectional view of a coordinate indicator 14 according to a fourth embodiment of the present invention;
Fig. 8 is a sectional view of a coordinate indicator 15 according to a fifth embodiment of the present invention;
Fig. 9 is a sectional view of a coordinate indicator 16 according to a sixth embodiment of the present invention; and
Fig. 10 is a sectional view of a coordinate indicator 17 according to a seventh embodiment of the present invention.

### DESCRIPTION OF THE PREFERRED EMBODIMENTS

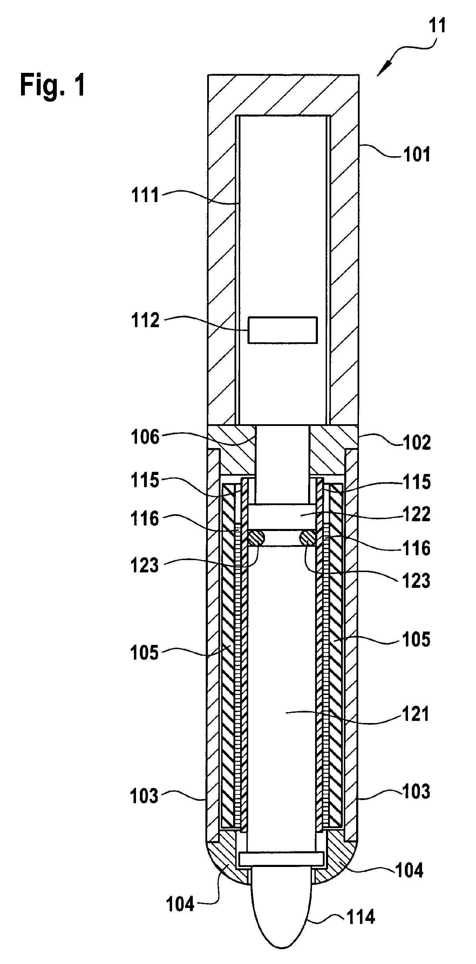

The preferred embodiments of the present invention will be described below with reference to Figs. 1 to 10.

### (First Embodiment)

Fig. 1 is a sectional view of a coordinate indicator 11 according to a first embodiment of the present invention. Referring to Fig. 1, reference numeral 101 denotes an upper case; numeral 102 a substrate holder; numeral 103 a ceramic pipe; numeral 104 an edge case; numeral 106 a stopper; numeral 111 a substrate; numeral 112 a capacitor; numeral 114 a center core; numeral 115 a tube; numeral 116 a coil; numerals 121 and 122 ferrite cores; and numeral 123 an O-ring. In Fig. 1, the coordinate indicator 11 is shown in a non-operated state.

The coordinate indicator 11 includes a hollow case formed by mocking up the shape of a writing material, such as a ball-point pen or an automatic pencil, so as to accommodate components therein. This case is composed of the upper case 101, the substrate holder 102, the ceramic pipe 103, and the edge case 104, which are connected together.

The cylindrical upper case 101 corresponds to the rear anchor of the coordinate indicator 11. Within the upper case 101 with one end closed, the substrate 111 having the capacitor 112 mounted thereon is accommodated. To the other end of the upper case 101, the substrate holder 102 is connected.

The substrate holder 102 is fixed between the upper case 101 and the ceramic pipe 103. One end of the substrate holder 102 is fixed to the upper case 101 so as to fix the substrate 111. The other end of the substrate holder 102 is stepwise formed to taper away, and is fitted into the ceramic pipe 103.

Within the upper case 101, the stopper 106 is also arranged so as to overlap with the substrate holder 102. The rear end of the stopper 106 is fixed to the substrate holder 102 while the front end abuts the below-mentioned ferrite core 122.

The ceramic pipe 103 is a cylindrical member made of a ceramic, such as alumina or zirconia, and accommodates part of the substrate holder 102 therein.

To the front end of the ceramic pipe 103, the edge case 104 is connected. The edge case 104 is approximately dome-shaped, and has a through hole at the front end.

The center core 114 is arranged to pass through the hole of the edge case 104. The front end of the center core 114 is protruded outside the edge case 104 while the rear end is positioned within the edge case 104. The rear end of the center core 114 is shaped in a flange with a diameter larger than that of the hole of the edge case 104, so that the center core 114 cannot come off the edge case 104.

At the rear end of the center core 114, the ferrite core 121 is arranged. The ferrite core 121 is a bar-like ferrite with a circular or rectangular cross-section. The front end thereof abuts the center core 114 while the rear end abuts the O-ring 123.

The ferrite core 122 is one piece of the ferrite with the same cross-section as that of the ferrite core 121. One end of the ferrite core 122 opposes the rear end of the ferrite core 121 with the O-ring 123 in the gap therebetween. The other end of the ferrite core 122 abuts the stopper 106 to be fixed.

After assembling the center core 114, the ferrite cores 121 and 122, and the O-ring 123 within the upper case 101, the ceramic pipe 103, and the edge case 104, when the stopper 106 is fixed to the substrate holder 102 so as to abut the ferrite core 122, allowable errors of the ferrite cores 121 and 122 can be absorbed with the stopper 106.

The O-ring 123 is an O-shaped member made of a flexible material and having a through hole formed at the center of its plane. Since the O-ring 123 has elasticity and flexibility, when a force is applied in a direction that the ferrite cores 121 and 122 come close to each other, the O-ring 123 is bent so as to reduce the distance between the ferrite cores 121 and 122.

The tube 115 is a pipe member arranged for accommodating the ferrite cores 121 and 122 and the O-ring 123 therein. The tube 115 has a length extending from the vicinity of the front end of the ferrite core 121 toward the end of the ferrite core 122 adjacent to the substrate holder 102. The inner diameter of the tube 115 substantially equals to the respective diameters of the ferrite cores 121 and 122, so that the tube 115 may be in contact with the ferrite cores 121 and 122 or there may be clearances therebetween. When the tube 115 is in contact with the ferrite cores 121 and 122, it is necessary not to strongly press the ferrite core 121 to the extent the ferrite core 121 is completely fixed; that is, it is required to have looseness to a certain degree that the ferrite core 121 can be slightly displaced.

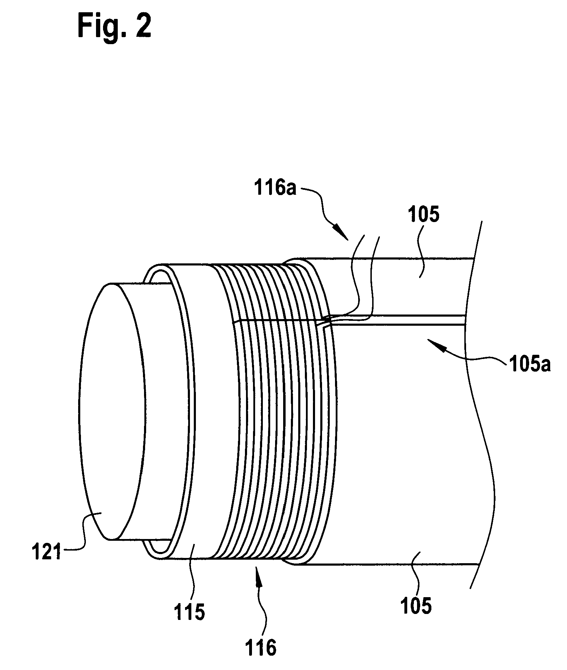

Around the tube 115, the coil 116 is externally arranged. The coil 116 is formed by winding a conductor wire (Litz wire, etc.) covered on the external peripheral surface (lateral face) of the tube 115. One end or both ends of the conductor wire extend to the substrate 111 as lead wires 116a (Fig. 2) to be connected to the capacitor 112 mounted on the substrate 111.

Furthermore, outside the coil 116 wound around the tube 115, a cushioning member 105 is arranged. The cushioning member 105 is made of a material having an impact-absorbing (cushioning) function, such as a predetermined elasticity or flexibility.

Fig. 2 is an exemplary view of structures of the ferrite core 121, the tube 115, the coil 116, and the cushioning member 105, which are accommodated within the ceramic pipe 103. In Fig. 2, the ferrite core 121, the tube 115, and the coil 116 are shown in a partially exposed state; however, this is for the sake of convenience in description and in practice, not all the components are exposed unlike in Fig. 2. The practical structure is shown in Fig. 1.

As shown Fig. 2, the cushioning member 105 is formed by winding a rectangular sheet around the coil 116. The rectangular sheet of the cushioning member 105 has a length slightly smaller than that completely covering the coil 116, i.e., a length slightly smaller than the external periphery of the coil 116. When the cushioning member 105 is wound around the coil 116, a part not covered with the cushioning member 105, i.e., a clearance at a seam, is formed. The clearance is a notch 105a extending along the longitudinal direction of the tube 115.

Since the notch 105a is a groove extending along the longitudinal direction of the tube 115, the lead wire 116a extending from the one end or both ends of the conductor wire constituting the coil 116 can be arranged within the notch 105a. The lead wire 116a arrives at the substrate 111 after passing through within the notch 105a so as to be connected to the capacitor 112 (Fig. 1) via a circuit element (not shown) or a terminal (not shown), which are mounted on the coordinate indicator 11.

As shown in Figs. 1 and 2, within the ceramic pipe 103, outside the ferrite cores 121 and 122, the tube 115, the coil 116, and the cushioning member 105 are arranged in layers.

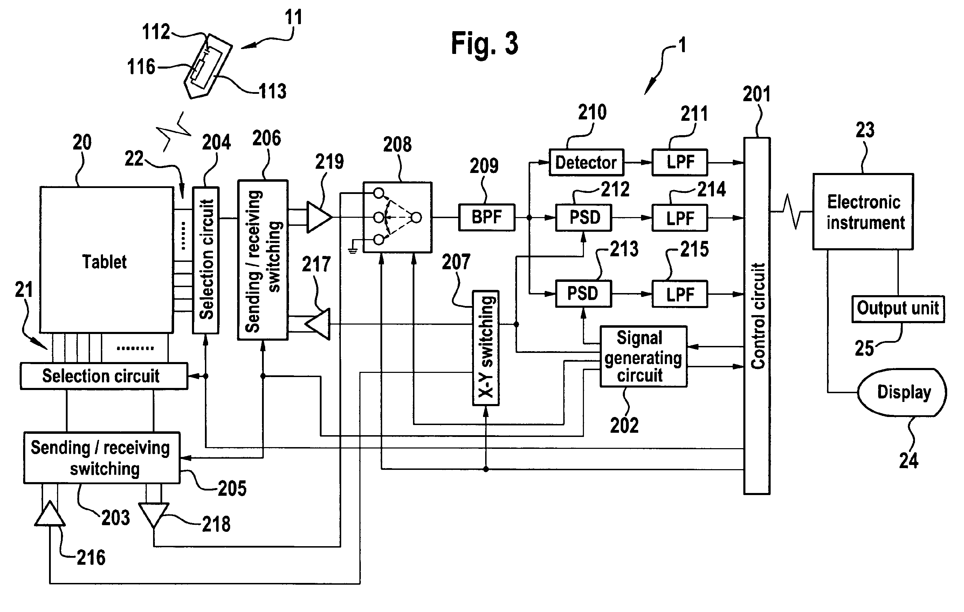

The substrate 111 is a printed circuit board having the capacitor 112 and so forth mounted thereon, and is accommodated within the upper case 101 and fixed to the substrate holder 102. The capacitor 112 is a known element. In the coordinate indicator 11, a tuning circuit 113 (Fig. 3) is constructed to include the capacitor 112 and the coil 116. The tuning circuit 113 may obviously include not only the capacitor 112 and the coil 116 but also other circuit elements (not shown).

Among the components mentioned above, the upper case 101, the substrate holder 102, the edge case 104, and the stopper 106 may be made of a synthetic resin or a metal; however, other materials may also be used.

The center core 114 may be made of a synthetic resin, and in view of abrasion resistance during sliding, a polyacetal resin (Duracon) may be preferable.

The reason why the ceramic pipe 103 is made of a ceramic is for characteristics of high hardness, excellent resistance to impact, and having no magnetic effect. Hence, other materials having characteristics similar to those may also be used. It is to be noted that instead of a ceramic pipe another kind of ceramic wall can be arranged in the housing of the coordinate indicator for the purpose of shock protection of the ferrite cores.

Furthermore, the O-ring 123 is made of synthetic rubber, such as silicon rubber and a synthetic resin, such as urethane rubber. Various materials may be used as long as they are having flexibility and elasticity; however, in view of the recoverability to an initial state after a pressing force is applied thereto, pure silicon is preferable and a pure silicon with a rubber hardness of 30° is more preferable. The cushioning member 105 may be a material only having an impact absorbing function, so that it may use pure silicon, silicon rubber, synthetic rubber, urethane silicon rubber, other synthetic rubbers, urethane rubber, and other synthetic resins.

The tube 115 is made of a synthetic resin, such as polyimide; however, other materials may also be used as long as they have characteristics of predetermined hardness, elasticity, and flexibility, and having no magnetic effect.

The coordinate indicator 11 constructed as described above is operated on a substantially planar tablet 20 (Fig. 3). During operation, the coordinate indicator 11 is held with the end of the edge case 104 being downward directed so as to press the center core 114 on the tablet 20 (Fig. 3) in the same way as that in normal writing materials.

During the operation of the coordinate indicator 11, the center core 114 is pushed into the edge case 104 by a pressing force applied thereto, so that the ferrite core 121 is pushed toward the ferrite core 122 together with the center core 114. The O-ring 123 herein is elastically deformed, so that the ferrite core 121 is displaced so as to approach the ferrite core 122.

Then, the space between the ferrite cores 121 and 122 is changed (reduced), so that the inductance of the coil 116 is varied.

Accordingly, the inductance of the coil 116 changes during the operation of the coordinate indicator 11, so that the operation of the coordinate indicator 11 can be sensed by detecting the change in the inductance with the tablet 20 (Fig. 3).

Next, a coordinate input device 1 including the coordinate indicator 11 will be described.

Fig. 3 is a circuit diagram of the coordinate input device 1. In the drawing, reference numeral 20 denotes the tablet; numeral 201 a control circuit; numeral 202 a signal generating circuit; numerals 203 and 204 selection circuits in X and Y directions, respectively; numerals 205 and 206 sending/receiving switching circuits; numeral 207 an X-Y switching circuit; numeral 208 a receive timing switching circuit; numeral 209 a BPF (band pass filter); numeral 210 a detector; numeral 211 a LPF (low pass filter); numerals 212 and 213 PSDs (phase shift detectors); numerals 214 and 215 low pass filters (LPFs); numerals 216 and 217 drive circuits; numerals 218 and 219 amplifiers; numeral 23 an electronic instrument; numeral 24 a display; and numeral 25 an output unit.

The electronic instrument 23 may include a personal computer integrally or externally having the display 24, such as an LCD (liquid crystal display), a PDA (personal digital assistant), and a portable terminal having a radio communication function. The output unit 25 may include a printer integrated with or externally connected to the electronic instrument 23, a radio communication device, various disk drives, and a memory system using a semiconductor memory.

The tablet 20 shown in Fig. 3 has a planar operation area (not shown). On the operation area, a two-dimensional orthogonal X-Y coordinate system is set for detecting the operational position of the coordinate indicator 11, and an X-direction loop coil group 21 and a Y-direction loop coil group 22 are provided.

The X-direction loop coil group 21 is composed of a number of loop coils arranged along the X-direction in parallel with each other so as to overlap with each other, and the Y-direction loop coil group 22 is composed of a number of loop coils arranged along the Y-direction in parallel with each other so as to overlap with each other.

The control circuit 201 shown in Fig. 3 is configured by a known microprocessor so as to control the signal generating circuit 202 as well as to control the switching of the loop coil in the loop coil groups 21 and 22 provided in the tablet 20. Also, the control circuit 201 controls the switching of the coordinate detection direction in the X-Y switching circuit 207 and the receive timing switching circuit 208.

Furthermore, the control circuit 201 A/D converts the outputs from the low pass filters 211, 214, and 215 and performs the blow-mentioned computation so as to obtain the coordinate value at the position designated by the coordinate indicator 11 and to detect the phase of the received signal so as to feed it to the electronic instrument 23.

The selection circuit 203 sequentially selects one loop coil from the X-direction loop coil group 21. The selection circuit 204 sequentially selects one loop coil from the Y-direction loop coil group 22. These selection circuits 203 and 204 operate respectively according to the information from the control circuit 201.

The sending/receiving switching circuit 205 connects the one loop coil in the X-direction selected by the selection circuit 203 alternately to the drive circuit 216 and the amplifier 218. The sending/receiving switching circuit 206 connects the one loop coil in the Y-direction selected by the selection circuit 204 alternately to the drive circuit 217 and the amplifier 219. The sending/receiving switching circuits 205 and 206 operate according to the sending/receiving switching signal from the signal generating circuit 202.

The signal generating circuit 202 generates and outputs a square wave signal with predetermined frequency, a signal with the phase lagging by 90 degrees from that of the square wave signal, a sending/receiving switching signal with predetermined frequency, and a receive timing signal.

The square wave signal output from the signal generating circuit 202 is fed to the phase shift detector 212 while being converted into a sine wave signal by a low pass filter (not shown). Furthermore, the square wave signal is fed to any one of the drive circuits 216 and 217 via the X-Y switching circuit 207. The square wave signal output from the signal generating circuit 202 is also fed to the phase shift detector 213; the sending/receiving switching signal is fed to the sending/receiving switching circuits 205 and 206; and the receive timing signal is fed to the receive timing switching circuit 208.

From the control circuit 201, the information selecting the X-direction is output; in a state that is input into the X-Y switching circuit 207 and the receive timing switching circuit 208, the sine wave signal output from the signal generating circuit 202 is fed to the drive circuit 216, and is converted into an equilibrium signal. Furthermore, the sine wave signal is fed to the sending/receiving switching circuit 205. The sending/receiving switching circuit 205 herein switches any one of the drive circuit 216 and the amplifier 218 so as to be connected based on the sending/receiving switching signal, so that the signal output to the selection circuit 203 from the sending/receiving switching circuit 205 becomes a signal in that output/stop is repeated every predetermined time (referred to as time T below). Then, the signal output from the sending/receiving switching circuit 205 is fed to the loop coil selected by the selection circuit 203, so that in the loop coil, a radio wave is generated based on the input signal.

The period of time in that the signal is output to the loop coil is defined to be the sending period while the period in that the signal is not output is defined to be the receiving period. The sending period and the receiving period are alternately repeated every time T.

When the coordinate indicator 11 is held in a substantially upstanding state, i.e., in an operation state, on the tablet 20, the coil 116 of the coordinate indicator 11 is excited by the radio wave produced from the selected loop coil so as to generate an induction voltage in the tuning circuit 113.

Then, by the operation of the sending/receiving switching circuit 205, the coordinate input device 1 enters the receiving period, and when the loop coil selected by the selection circuit 203 is switched to the amplifier 218, the radio wave from the loop coil is immediately dispersed while the induction voltage generated in the tuning circuit 113 of the coordinate indicator 11 is gradually attenuated in accordance with the loss in the tuning circuit 113.

Then, based on the induction voltage, by the electric current passing through the tuning circuit 113, a radio wave is transmitted from the coil 116. By the radio wave transmitted from the coil 116, the loop coil group 21 connected to the amplifier 218 is excited so as to generate an induction voltage in the loop coil group 21. This induction voltage is fed from the sending/receiving switching circuit 205 to the amplifier 218 only during the receiving period. In the amplifier 218, the voltage is amplified, and is fed to the receive timing switching circuit 208.

In the receive timing switching circuit 208, any one of selection information in the X-direction and selection information in the Y-direction and a receive timing signal, which is the substantial inversion signal of a sending/receiving switching signal, are input. The receive timing switching circuit 208 outputs a receive signal H in a high-level period of the receive timing signal while does not output any signal in a low-level period, so as to output substantially the same signal as the receive signal.

The signal output from the receive timing switching circuit 208 is fed to the band pass filter 209. The band pass filter 209 is a ceramic filter with characteristic frequency fo, and sends a signal with an amplitude corresponding to the energy of the frequency fo component of an input signal to the detector 210 and the phase shift detectors 212 and 213.

The signal input in the detector 210 is detected and rectified, and is further converted into a DC signal with a voltage corresponding to approximately one-half of the amplitude by the low pass filter 211 with a sufficiently low cut-off frequency, and it is fed to the control circuit 201. The voltage of the DC signal is produced based on the induction voltage generated in the loop coil of the loop coil group 21 and has a value in inverse proportion to the distance between the coordinate indicator 11 and the loop coil. Hence, when the loop coil is switched to a different loop coil, the voltage of the DC signal becomes different.

Accordingly, in the control circuit 201, by converting the voltage obtained for each loop coil into a digital value so as to obtain the positional relationship between each loop coil and the coordinate indicator 11 by performing the below-mentioned computation, the X-direction coordinate value at the position designated by the coordinate indicator 11 can be obtained. In addition, the Y-direction coordinate value at the position designated by the coordinate indicator 11 can be obtained in the same way.

On the other hand, to the phase shift detector 212, the square wave signal output from the signal generating circuit 202 is input as a detection signal, and further to the phase shift detector 213, a signal with the phase lagging by 90 degrees from that of the square wave signal is input.

When the phase of the signal input from the band pass filter 209 substantially agrees with that of the square wave signal input from the signal generating circuit 202, the phase shift detector 212 outputs a signal positively inverted from the signal input from the band pass filter 209, and the phase shift detector 213 outputs a signal with a waveform bilaterally symmetrical in positive and negative directions.

The signal output from the phase shift detector 212 is converted into a DC signal with a voltage corresponding to approximately one-half of the amplitude by the low pass filter 214, and it is fed to the control circuit 201. The signal output from the phase shift detector 213, in the same way, is converted into a DC signal by the low pass filter 215, and it is fed to the control circuit 201.

The control circuit 201 converts output values of the low pass filters 214 and 215 into digital values so as to obtain phase differences θ to the signals added to the phase shift detectors 212 and 213 by performing computation using the digital values.

The phase of the signal output from the band pass filter 209 varies with the tuning frequency in the tuning circuit 113 of the coordinate indicator 11. That is, when the tuning frequency in the tuning circuit 113 agrees with the predetermined frequency fo, the tuning circuit 113 generates an induction voltage with the frequency fo both in the sending and receiving periods of the signal so as to pass through an electric current synchronized with this voltage, so that the frequency and the phase of the receiving signal output from the amplifier 218 agree with those of the square wave signal output from the signal generating circuit 202, and the phase of the signal output from the band pass filter 209 also agrees with that of the square wave signal.

On the other hand, when the tuning frequency in the tuning circuit 113 does not agree with the predetermined frequency fo, when it is a frequency f1 slightly lower than fo, for example, the tuning circuit 113 generates the induction voltage with the frequency fo in the sending period, and an induction current with the phase lagging from the voltage passes through the tuning circuit 113 due to the induction voltage. In the receiving period, an induction voltage with a frequency approximately f1 is generated and the induction current synchronized therewith passes, so that the frequency of the receiving signal output from the amplifier 218 is slightly lower than that of the square wave signal output from the band pass filter 209, and the phase thereof slightly lags therefrom.

Since the band pass filter 209 has only the characteristic frequency fo as described above, the frequency shift of the input signal toward the lower is output as phase lagging, so that the phase of the signal output from the band pass filter 209 lags further from that of the receiving signal output from the amplifier 218.

Conversely, when the tuning frequency in the tuning circuit 113 is a frequency f2 slightly higher than the predetermined frequency fo, the tuning circuit 113 generates the induction voltage with the frequency fo in the sending period so that an induction current with phase advancing therefrom passes through the tuning circuit 113. Since in the receiving period, the induction voltage with the frequency approximately f2 and the induction current synchronized therewith pass through, the frequency of the receiving signal output from the amplifier 218 is slightly higher than that of the square wave signal, and the phase thereof also advances slightly therefrom. In the band pass filter 209, the frequency shift of the input signal toward the higher is output as phase advancing inversely to the above-mentioned case, so that the phase of the signal output from the band pass filter 209 further advances from that of the receiving signal output from the amplifier 218.

As described above, in the coordinate indicator 11, the ferrite core 121 comes close to the ferrite core 122 during the operation. Accordingly, the inductance of the coil 116 increases during the operation of the coordinate indicator 11, and the tuning frequency of the tuning circuit 113 is shifted to the lower frequency. The change in the tuning frequency corresponds to the change in the inductance, i.e., deformation of the O-ring 123. Hence, on the basis of the phase difference θ obtained from the computation by the control circuit 201, the deformation of the O-ring 123, i.e., the force applied to the coordinate indicator 11 during the operation, can be detected.

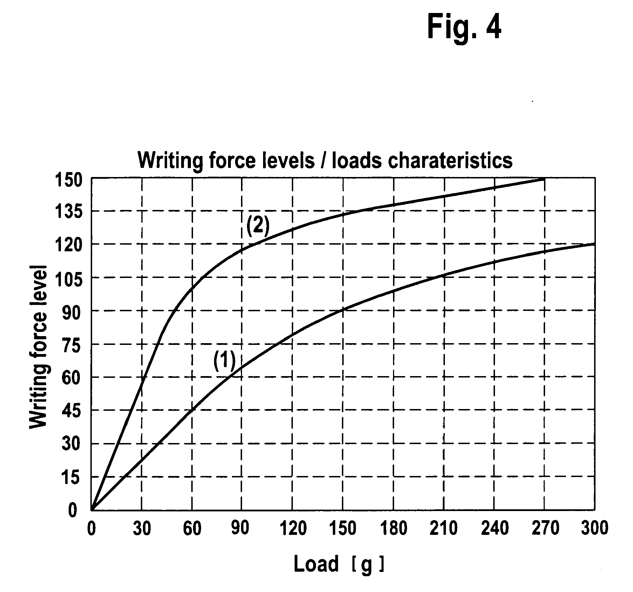

The operation of detecting the force applied to the coordinate indicator 11 during the operation by the coordinate input device 1 will be described by exemplifying specific examples. Fig. 4 is a graph showing the correlation between the load applied to the coordinate indicator 11 and the writing force level detected in the coordinate input device 1.

Specific conditions of Examples (1) and (2) shown in Fig. 4 are shown below. Example (1)
The tube 115: made of polyimide; external diameter 1.72 mm; internal diameter 1.6 mm; and length 25 mm.
The ferrite core 121: using L6 member (made from TDK corporation); and shaped in a cylinder with external diameter 1.6 mm and length 20 mm.
The ferrite core 122: using L6 member (made from TDK corporation); and shaped in a cylinder with external diameter 1.6 mm and length 2 mm.
The O-ring 123: made of silicon rubber (hardness 30 degrees) having a wire diameter of 0.4 mm; external diameter 1.6 mm; and internal diameter 0.8 mm.
The coil 116: using five-core Litz wire with a wire diameter of 0.07 mm.

### Example (2)

In Example (1), the ferrite core 122 used L6 member (made from TDK corporation), and was shaped in a cylinder with external diameter 1.6 mm and length 3 mm.

In the graph shown in Fig. 4, the loads applied to the coordinate indicator 11 are plotted in abscissa and the writing force levels detected by the coordinate input device 1 are plotted in ordinate.

The change in writing force level detected by the tablet 20 is based on the change in inductance of the] coil 116 as described above. Hence, the changes in ordinate of the graph are indirectly assumed to be changes in inductance of the coil 116.

In any of Examples (1) and (2) shown in Fig. 4, the detected writing force level obviously varies in accordance with the load to the coordinate indicator 11, so that it is obvious to accurately detect the change in load applied to the coordinate indicator 11.

In Examples shown in Fig. 4, when the load applied to the coordinate indicator 11 changes in a range of 0 to 300 grams, even if the change is so small as about 10 to 30 grams, the change in load (writing force level) is securely detected by the coordinate input device 1. Accordingly, the coordinate input device 1 can securely detect even subtle operation of the coordinate indicator 11.

In addition, in Example (1) shown in Fig. 4, the writing force level detected by the coordinate input device 1 moderately increases with the increase in load applied to the coordinate indicator 11. On the other hand, in Example (2), the writing force level quickly increases with the increase in load in comparison with Example (1).
This shows that because the ferrite core 122 in Example (2) is larger in size than that of Example (1), the inductance of the coil 116 sharply changes with the approach of the ferrite core 121 to the ferrite core 122,

As described above, according to the first embodiment of the present invention, by the coordinate input device 1, the load to the coordinate indicator 11 can be precisely detected, so that the operation of the coordinate indicator 11 can be appropriately responded, enabling the operationality to be comfortably secured.

Also, the coordinate indicator 11 uses very slender ferrite materials as the ferrite cores 121 and 122, so that even considering thicknesses of the tube 115, the coil 116, and the cushioning member 105, the diameter of the coordinate indicator 11 can be extremely reduced. For example, in Examples shown in Fig. 4, both the ferrite cores 121 and 122 have a diameter of 1.6 mm. In this case, the coordinate indicator 11 can have a very slender pen-shape with an external diameter about 3 mm.

Thus, the coordinate indicator 11 can be extremely miniaturized in comparison with conventional ones. For example, a thin-type electronic instrument can be provided with a pocket formed on a casing for accommodating the coordinate indicator 11 therein, largely extending the application range of the pen tablet.

In the coordinate indicator 11 according to the first embodiment, the ferrite cores 121 and 122 are accommodated within the tube 115 and are further packaged with the cushioning member 105. Hence, if a strong external force is applied to the coordinate indicator 11, the impact applied to the ferrite cores 121 and 122 is alleviated by the cushioning member 105 and so forth, thereby extremely reducing possible damage of the ferrite cores 121 and 122. That is, using the tube 115 and the cushioning member 105 overcomes the brittleness of the member such as the ferrite cores 121 and 122. Thus, when the ferrite cores 121 and 122 are extremely reduced in length, and even if a user drops the coordinate indicator 11 in mistake, the damage of the members cannot occur, achieving a highly reliable coordinate indicator with excellent impact resistance.

### (Second Embodiment)

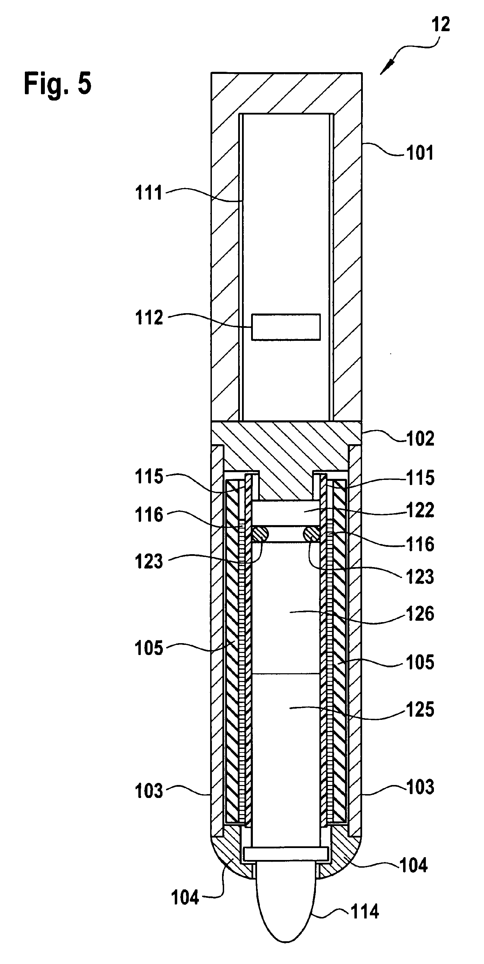

Fig. 5 is a sectional view of a coordinate indicator 12 according to a second embodiment of the present invention. According to the second embodiment, like reference characters in Fig. 5 designate like elements common to the coordinate indicator 11 shown in Fig. 1, and the description thereof is omitted.

The coordinate indicator 12 shown in Fig. 5 includes ferrite cores 125 and 126 arranged instead of the ferrite cores 121 and 122 of the coordinate indicator 11 shown in Fig. 1.

The respective ferrite cores 125 and 126 are bar-like ferrite members with approximately the same external diameter as that of the ferrite core 121 (Fig. 1) and with the length about half of that in the ferrite core 121. That is, the coordinate indicator 12 may be assumed to have a ferrite core that is a lengthwise division of the ferrite core 121 into two equal parts.

In addition, there is no element arranged between the ferrite cores 125 and 126, so that the cores come in contact with each other on end faces.

The ferrite member is known as a brittle material, and especially when it is made in a thin long shape, the ferrite material has a tendency to be damaged by a strong external force. Conversely, the shorter the length becomes, the resistance to the external force increases.

Thus, since the ferrite cores 125 and 126 are smaller in length than the ferrite core 121, there is less possibility of being damaged by an impact. Because the ferrite cores 125 and 126 are accommodated within the tube 115 and are packaged with the cushioning member 105 in the same way as in the ferrite core 121 (Fig. 1), their possibility of being damaged by an externally applied impact may be further reduced.

Since no component is sandwiched between the ferrite cores 125 and 126, the change in inductance when a load is applied to the center core 114 is sharp in the same way as in the coordinate indicator 11. Thus, the coordinate indicator 12 can be utilized for the coordinate input device 1 in the same way as in the coordinate indicator 11.

In such a manner, the configuration of the coordinate indicator 12 shown in Fig. 5 can achieve a reliable slender coordinate indicator with higher resistance to impact and the same preferable operability as that of the coordinate indicator 11.

### (Third Embodiment)

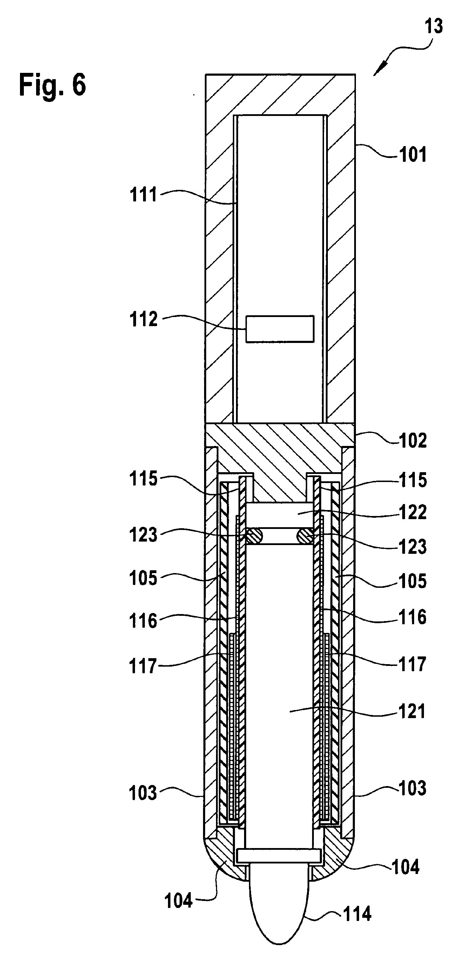

Fig. 6 is a sectional view of a coordinate indicator 13 according to a third embodiment of the present invention. According to the third embodiment, like reference characters in Fig. 6 designate like elements common to the coordinate indicator 11 shown in Fig. 1, and the description thereof is omitted.

The coordinate indicator 13 shown in Fig. 6 further includes a second coil 117 arranged outside the coil 116 of the coordinate indicator 11 shown in Fig. 1.

The second coil 117 is formed by winding a coated conducting wire, which is connected to the coil 116, around the coil 116 directly or with an insulating film therebetween. That is, after winding the conducting wire around the tube 115 to form the coil 116, this conducting wire is further wound therearound so as to form the second coil 117, so that one long coil is folded back so as to form the coil 116 and the second coil 117.

In the example shown in Fig. 6, the second coil 117 is arranged so as to cover part of the coil 116 adjacent to the center core 114. Accordingly, part of the ferrite core 121 adjacent to the front end is accommodated within the double coil, so that inductances of the coil 116 and the second coil 117 are remarkably affected by the displacement of the ferrite core 121. It is to be noted that the conducting wire can be further wound to form one or more additional coils on the second coil 117.

Hence, according to the third embodiment, when a load is applied to the center core 114 by the operation of the coordinate indicator 13, the coil 116 and the second coil 117 sharply respond to the load so as to securely detect the operation of the coordinate indicator 13. Thereby, the operability of the reliable slender coordinate indicator with higher resistance to impact can be furthermore improved.

### (Fourth Embodiment)

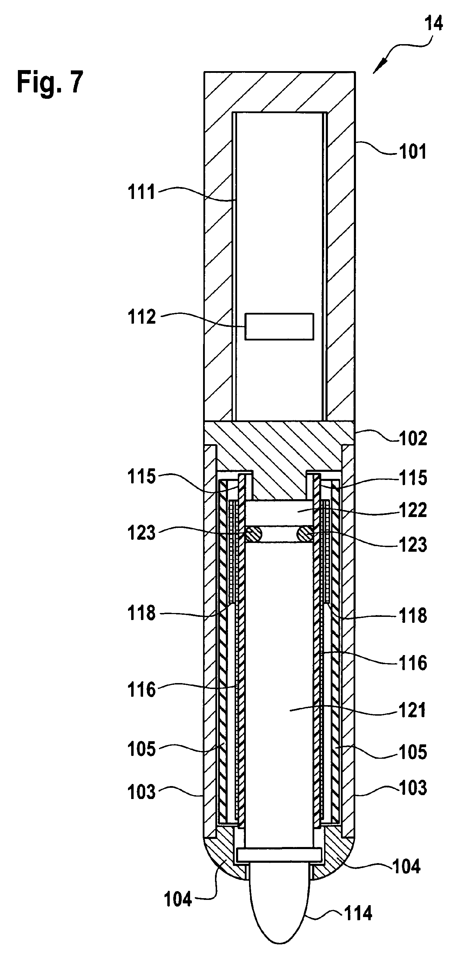

Fig. 7 is a sectional view of a coordinate indicator 14 according to a fourth embodiment of the present invention. According to the fourth embodiment, like reference characters in Fig. 7 designate like elements common to the coordinate indicator 11 shown in Fig. 1, and the description thereof is omitted.

The coordinate indicator 14 shown in Fig. 7 further includes a second coil 118 arranged outside the coil 116 of the coordinate indicator 11 shown in Fig. 1.

The second coil 118 is formed by winding a coated conducting wire, which is connected to the coil 116, around the coil 116 directly or with an insulating film therebetween. That is, after winding the conducting wire around the tube 115 to form the coil 116, this conducting wire is further wound therearound so as to form the second coil 118, so that one long coil is folded back so as to form the coil 116 and the second coil 118. It is to be noted that the conducting wire can be further wound to form one or more additional coils on the second coil 118.

In the example shown in Fig. 7, the second coil 118 is arranged so as to cover part of the coil 116 adjacent to the upper case 101. Accordingly, part of the ferrite core 121 adjacent to the rear end, the O-ring 123, and the ferrite core 122 are accommodated within the double coil, so that inductances of the coil 116 and the second coil 118 are remarkably affected by the displacement of the ferrite core 121.

Hence, according to the fourth embodiment, when a load is applied to the center core 114 by the operation of the coordinate indicator 14, the coil 116 and the second coil 118 sharply respond to the load so as to securely detect the operation of the coordinate indicator 14. Thereby, the operability of the reliable slender coordinate indicator with higher resistance to impact can be furthermore improved.

### (Fifth Embodiment)

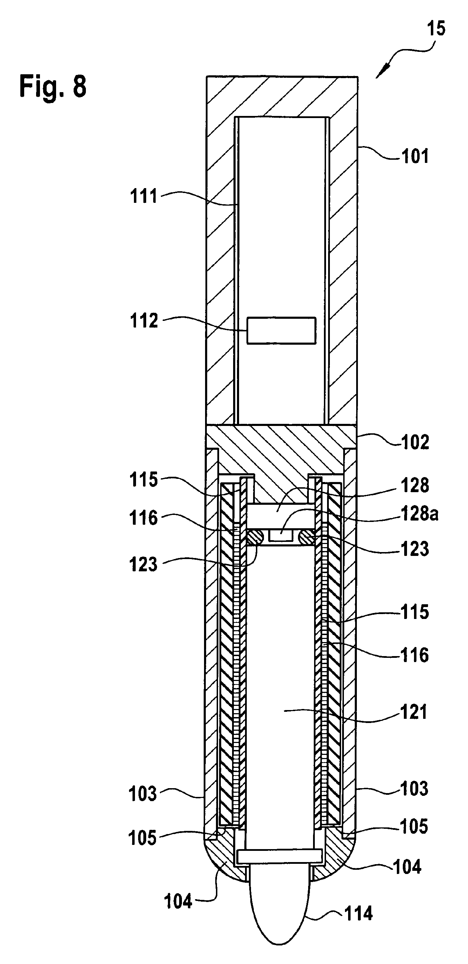

Fig. 8 is a sectional view of a coordinate indicator 15 according to a fifth embodiment of the present invention. According to the fifth embodiment, like reference characters in Fig. 8 designate like elements common to the coordinate indicator 11 shown in Fig. 1, and the description thereof is omitted.

The coordinate indicator 15 shown in Fig. 8 includes a ferrite core 128 arranged instead of the ferrite core 121 of the coordinate indicator 11 shown in Fig. 1.

The ferrite core 128 is a ferrite member with approximately the same external diameter as that of the ferrite core 122 (Fig. 1) and includes a projection 128a formed on its end face adjacent to the ferrite core 121.

Therefore, the gap between the ferrite core 128 and the ferrite core 121 of the coordinate indicator 15 is small during non-operation in comparison with that between the ferrite cores 121 and 122 of the coordinate indicator 11 (Fig. 1). Thus, when the ferrite core 121 is displaced together with the center core 114 so as to come close to the ferrite core 128 by the operation of the coordinate indicator 15, the inductance of the coil 116 varies more sharply.

Hence, when the coordinate indicator 15 is utilized in the coordinate input device 1 in the same way as in the coordinate indicator 11 (Fig. 1), the coordinate input device 1 can detect the operation of the coordinate indicator 15 more securely.

In such a manner, according to the configuration of the coordinate indicator 15 shown in Fig. 8, the more preferable operability of the reliable slender coordinate indicator with high resistance to impact can be achieved.

In addition, the shape of the projection 128a formed on the ferrite core 128 is arbitrary, so that its cross-section may be circular or rectangular. The height of the projection 128a may be arbitrarily set based on the external diameter of the O-ring 123; however, it is preferable that the projection 128a do not come in contact with the ferrite core 121 during non-operation.

### (Sixth Embodiment)

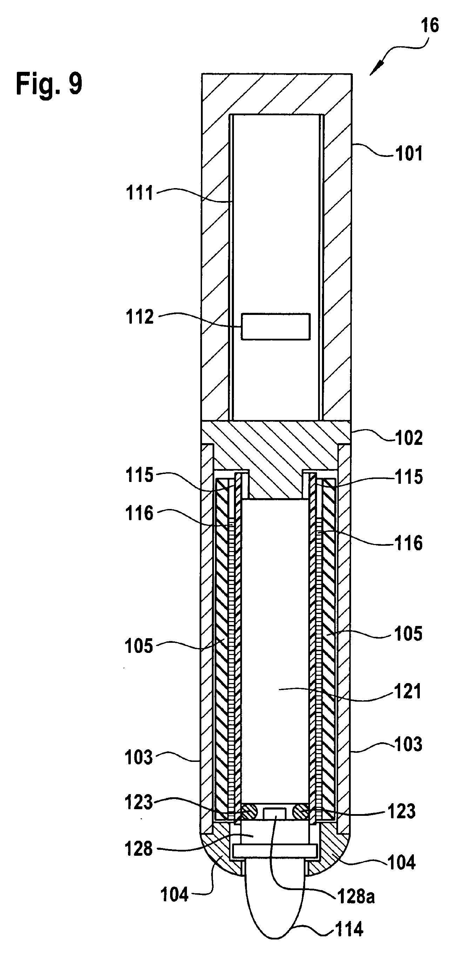

Fig. 9 is a sectional view of a coordinate indicator 16 according to a sixth embodiment of the present invention. According to the sixth embodiment, like reference characters in Fig. 9 designate like elements common to the coordinate indicator 11 shown in Fig. 1, and the description thereof is omitted.

In the coordinate indicator 16 shown in Fig. 9, the ferrite core 121, the O-ring 123, and the ferrite core 128 are arranged oppositely to those of the coordinate indicator 15 shown in Fig. 8 about the center of the coordinate indicator 15 in the longitudinal direction.

That is, in the coordinate indicator 16, the ferrite core 128 is arranged at the rear end of the center core 114 and the ferrite core 121 opposes the ferrite core 128 via the O-ring 123. The ferrite core 128 is provided with the projection 128a formed on its end face opposing the ferrite core 121.

According to the configuration of the coordinate indicator 16 shown in Fig. 9, by an external force applied to the center core 114, the ferrite core 128 is displaced together with the center core 114 so as to come close to the ferrite core 121 for reducing the gap between the ferrite core 121 and the ferrite core 128, so that the inductance of 116 is thereby changed.

When the coordinate indicator 15 (Fig. 8) is compared with the coordinate indicator 16, while the ferrite core 121 is displaced together with the center core 114 in the coordinate indicator 15, in the coordinate indicator 16, the ferrite core 128 is displaced together with the center core 114. The ferrite core 128 is shorter than the ferrite core 121.

Therefore, in the coordinate indicator 16, the smaller member is displaced, so that the inductance of the coil 116 varies more sharply during the operation of the coordinate indicator 16. This may lead to the effect that the coordinate input device 1 can easily detect the operation of the coordinate indicator 16.

### (Seventh Embodiment)

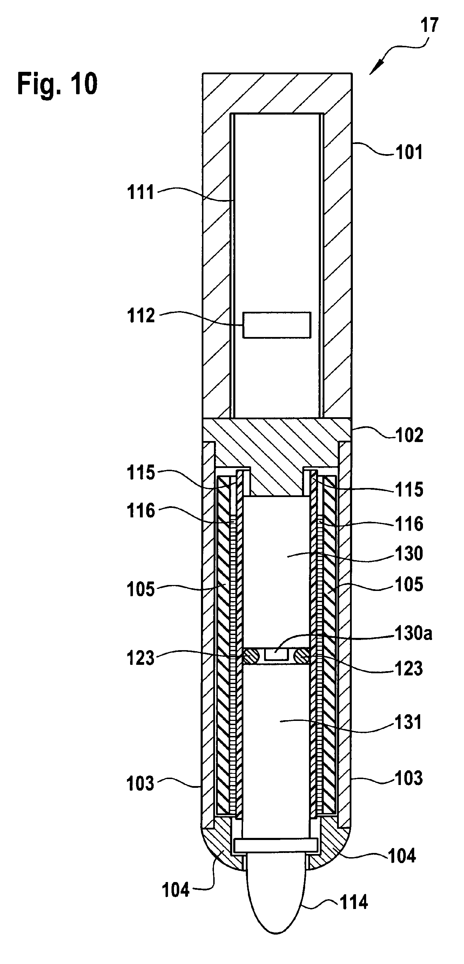

Fig. 10 is a sectional view of a coordinate indicator 17 according to a seventh embodiment of the present invention. According to the seventh embodiment, like reference characters in Fig. 10 designate like elements common to the coordinate indicator 11 shown in Fig. 1, and the description thereof is omitted.

The coordinate indicator 17 shown in Fig. 10 includes a ferrite core 131 arranged instead of the ferrite core 121 of the coordinate indicator 15 shown in Fig. 8 and a ferrite core 130 arranged instead of the ferrite core 128.

The ferrite core 130 is a bar-like ferrite member with approximately the same external diameter as that of the ferrite core 128 (Fig. 8) and with the length about half of that in the ferrite core 121 (Fig. 1). The ferrite core 130 includes a projection 130a formed on its end face opposing the ferrite core 131.

On the other hand, the ferrite core 131 is a bar-like ferrite member with approximately the same external diameter as that of the ferrite core 121 (Fig. 1) and with the length about half of that in the ferrite core 121 (Fig. 1), i.e., the approximately the same length as that of the ferrite core 130.

That is, in the coordinate indicator 17, the two ferrite cores 130 and 131, each with the length about half of that in the ferrite core 121 (Fig. 1), are arranged. The ferrite core 130 opposes the ferrite core 131 via the O-ring 123, and is provided with the projection 130a formed on the opposing surface.

Hence, according to the configuration of the coordinate indicator 17 shown in Fig. 10, since the ferrite cores smaller in length than in the coordinate indicator 11 (Fig. 1) are included, there is less possibility of the ferrite core being damaged when a strong external force is applied to the coordinate indicator 17. Also, the ferrite core 130 is provided with the projection 130a formed thereon, so that the gap between the ferrite core 130 and the ferrite core 131 is small during non-operation. Thus, when the ferrite core 131 is displaced together with the center core 114 so as to come close to the ferrite core 130 by the operation of the coordinate indicator 17, the inductance of the coil 116 varies more sharply.

In such a manner, according to the configuration of the coordinate indicator 17 shown in Fig. 10, a reliable slender coordinate indicator with higher resistance to impact and preferable operability can be provided.

According to the embodiments described above, the size, detailed shape, and dome curvature of the upper case 101, the substrate holder 102, and the edge case 104 which constitute the coordinate indicators 11 to 17 can be arbitrarily modified. The material of the ferrite cores 121, 122, 125, 126, 130, and 131 is not limited as long as it is a ferrite member, so that any material complying with an arbitrary specification and standard can be used. Furthermore, thicknesses of the ceramic pipe 103 and the cushioning member 105 are also arbitrary, and other detailed structures may be appropriately modified obviously within the scope of the present invention.

### Bezugszeichenliste

Fig. 3
   - 20:: TABLET
   - 203:: SELECTION CIRCUIT
   - 205:: SENDING/RECEIVING SWITCHING
   - 204:: SELECTION CIRCUIT
   - 206:: SENDING/RECEIVING SWITCHING
   - 207:: X-Y SWITCHING
   - 210:: DETECTOR
   - 202:: SIGNAL GENERATING CIRCUIT
   - 201:: CONTROL CIRCUIT
   - 23:: ELECTRONIC INSTRUMENT
   - 25:: OUTPUT UNIT
   - 24:: DISPLAY
Fig. 4
   WRITING FORCE LEVELS/LOADS CHARACTERISTICS
   WRITING FORCE LEVEL
   LOAD (g)

## Claims

1. A coordinate indicator comprising:
two cores (121, 122; 122, 125, 126; 121, 128, 128a; 130, 131), at least one of the cores being made of a magnetic material, the two cores forming a gap, and at least one of the two cores being movable in order to vary the size of the gap when the coordinate indicator is operated;
a tube (115) for accommodating at least part of the two cores; and
a coil (116) composed of a conducting wire wound around the tube.

2. The indicator according to Claim 1, further comprising an elastic body (123) arranged between the two cores.

3. The indicator according to Claim 1 or 2, wherein at least one of the two cores is composed of a plurality of magnetic materials.

4. The indicator according to any one of Claims 1 to 3, wherein at least part of the coil (116) being at least doubly coiled (117; 118) by winding the conduction wire of the coil to overlap on a part of the coil.

5. The indicator according to any one of Claims 1 to 4, wherein at least one of the two cores includes a projection (128a) formed on a surface opposing the other core.

6. The indicator according to any one of Claims 1 to 5, further comprising a cushioning member (105) disposed on at least a portion of the outside of the coil.

7. The indicator according to claim 6, the cushioning member forming a groove (105a) for receiving a wire (116a) being connected to the coil.

8. The indicator according to any one of Claims 2 to 7, wherein the elastic body includes an o-ring (123).

9. The indicator according to any one of Claims 1 to 8, wherein the tube is made of one of alumina and zirconia.

10. The indicator according to any one of Claims 1 to 9, the at least one of the cores being made of a magnetic material being constituted by facing first and second core members (125, 126) that are arranged along a length axis of the indicator.

11. The indicator according to any one of Claims 1 to 10, both of the two cores being made of a magnetic material.

12. The indicator according to any one of Claims 1 to 11, further comprising a ceramic wall (103) extending along a length axis of the indicator.

13. A position detector for measuring a position indicated by a coordinate indicator (11, 12, 13, 14, 15, 16, 17) in accordance with any one of the claims 1 to 12.

14. A position detection system comprising a coordinate indicator (11, 12, 13, 14, 15, 16, 17) in accordance with any one of the claims 1 to 12 and a position detector for coupling to an electronic apparatus.
